# EUROPEAN PATENT SPECIFICATION

(11) **EP 1 120 701 B1**
(45) Date of publication and mention of the grant of the patent: **26.09.2007**
(21) Application number: 00610016.8
(22) Date of filing: 28.01.2000
(51) Int. Cl.: G06F 21/24

(54) **System and method for ensuring secure transfer of a document from a client of a network to a printer**
System und Verfahren zur sicheren Übermittlung eines Dokumentes zwischen einem Client-Rechner eines Computer-Netzes und einem Drucker
Système et procédé pour sécuriser la transmission d'un document entre un ordinateur client d'un réseau et une imprimante

(43) Date of publication of application: 01.08.2001
(73) Proprietor: Safecom A/S, 2880 Bagsvaerd (DK)
(72) Inventor: Olsen, Theis, 2770 Kastrup (DK); Hougaard, Claes Christian, 2450 Copenhagen SV (DK); Bundesen, Rune Windfeld, 2100 Copenhagen Ø (DK); Nordly, Trygve Thor, 1705 Copenhagen V (DK)
(74) Representative: Nielsen, Henrik Sten

(56) References cited:
- EP-A- 0 929 023
- WO-A-97/32274
- US-A- 5 638 511

## Description

The invention relates to a printing control system and a printing control method for ensuring secure transfer of documents from a client connected to a network such as a local area network (LAN) or a wide area network (WAN) to a user who is allowed access to the documents from a printing communication unit connected to a printer. The printing control system and printing control method provides means for a client station to designate a document to a single user or a group of users and provides the possibility for the single user or the group of users to access the document at a plurality of printer communication units.

The state of the art provides several techniques for enabling a client the opportunity to share documents and directories with other clients connected to a network. Thus the state of the art provides other clients connected to a network to access a document and perform printing of the document either locally or at any printer accessible through the network. However, the state of the art fails to perform a secure transfer of the documents provided by the sharing client since the documents may be printed at any printer connected to the network and at any time according to the selected printer's job queue. Hence the user of the network may transmit a shared document as a print job to the printer's job queue without knowing when the printer actually prints the shared document and consequently the shared document may lay open to inspection by anybody at the printer.

In sharing a document or directory in the state of the art network system, the client sharing a document or directory may determine which clients of the network are allowed access to the shared document or shared directory. The state of the art network system, however, does not inform the sharing client which client or clients in the network have actually accessed the shared document or directory. Neither does the state of the art network system provide billing of the accessing clients when the shared document is opened or printed. Generally the state of the art network system provides the opportunity to share documents with designated users or clients of the network system without providing client's access times, clients accessing the shared document and accounting information to the sharing client.

A method and apparatus for managing remotely located document producing machines by using cellular radios is described in US patent no. US 5,787,149 hereby incorporated by reference in the patent specification. The US patent discloses an apparatus for managing a series of document producing machines such as printers, copiers or faxing machines by recording and transmitting use of the machines to a managing unit so as to provide a vendor leasing the machines to lessees with a picture of how much the machines are used. The vendor may then utilise the information transmitted from the machines to bill the lessees according to the lessees' use. The apparatus described in US 5,787,149 provides billing of a lessee in accordance with use of a leased document producing machine, however, the apparatus does not provide means for billing separate users having access to the leased document producing machine for producing prints of documents on the leased document producing machine. Further, EP 0 929 023 discloses a method for document printing in distributed computing environment and WO 97/32274 discloses a method for open systems printing.

An object of the present invention is to provide a system and method enabling safe printing of a print job by securing a transmission of the print job through a network to a printer and only releasing the print job to a user designated by a client of the system and method to access the print job.

A further object of the invention is to provide a system and method for distributing a document to a plurality of users while maintaining a secure transfer of information from the transmitting client to the plurality of users.

A particular advantage of the present invention is the provision in the system and the method of controlled discriminatory user access to a printer connected in a network by identifying users at the printer.

A particular feature of the present invention is the provision in the system and the method of an account or credit for each user so that the each user is allowed printing operations at the printing in accordance with user credit.

The above object, advantage and feature together with numerous other objects, advantages and features which will become evident from the below detailed description of a preferred embodiment of the present invention is according to a first aspect of the present invention obtained by printing control system for ensuring one or more users of a network (such as a LAN: local area network, or a WAN: wide area network) secure access to a print job designated to said one or more users of said network, and said printing control system comprising:
(a) a client station of a first plurality of client stations for designating said print job to said one or more users, said print job defining a document containing user readable information and defining a header containing document access information,
(b) a spool connected to said client station for spooling of said document and substituting said document in said print job with a spooled document,
(c) a job database connected to said spool for receiving said spooled document and said header from said client station, said job database defining a document table and a user table and storing said spooled document in said document table and storing said header in said user table,
(d) a printer communication unit of a second plurality of printer communication units for receiving user identifying data input by said one or more users to said printer communication unit,
(e) a server managed by a network administrator and interconnecting said printer communication unit to said job database for establishing said one or more users in said user table enabling said one or more users access to said network, for validating said one or more users on the basis of said user identifying data input to said printer communication unit against user information stored in said user table, and for ensuring said user identifying data and said user information provide said one or more users access to said spooled document,
(f) a printer connected to said printer communication unit for receiving said spooled document from said job database and having a request input for receiving a print request from said one or more users and communicating said print request to said server, and
(g) a print engine interconnecting said job database and said printer communication unit for compiling of said spooled document to be communicated to said printer through said printer communication unit, said print engine receiving said spooled document from said document table in said job database.

According to the basic realisation of the first aspect of the present invention the printing control system enables a plurality of client stations to designate a data file or document to a plurality of users accessing the printing control system by identifying themselves at any printer connected to the network. Thus providing a secure transfer of the data file or document designated to one user or a plurality of users from any of the client stations connected to the network by determining the identity of each user requesting a print of the data file or document. The transfer is further secured by encrypting the document before transferring the document through the network by utilising either a public encryption key or private encryption key.

The term one or more users as applied in this context should be construed as an individual user, a population of users, a plurality of users, a multiplicity of users or group of users, or an individual user in the said population of users.

The one or more users of the printing control system do not necessarily have to be provided with or have access to an individual client station, since the one or more users may simply have access to the print jobs display at the printer communication unit but access to designate print jobs. The printing control system may therefor ideally be utilised for distributing information such as working schedules, tasks or any other type of information to employees having no access to an individual client station in the network but entirely access to the printer communication unit. This may be employees such as machining tool operators, medical personal, sales assistance or chauffeurs not needing a personal computer or the like for performing their daily work. These employees may collect their daily tasks from a printer communication unit positioned at any location accessible to the employees.

The secure transfer of the document and further communication between elements of the printing control system is provided on the network is established by bus connections, by cable connections such as current carrying cables and/or optical cables, by wireless links such as mobile radio transmission links, infra-red transmission links or ultra-sonic transmission links, or by any combination thereof. By utilising bus connections between some or all elements of the printing control system a particular fast communication is achieved. However, generally communication between elements of the printing control system is performed on a wide variety of connections thus providing a very dynamic communication system.

Utilising mobile radio transmission links as for providing at least part of the network communication ensures a printing control system of great versatility, since the printing control system as such become mobile and client station may access the network from any position within range of a mobile radio transmitter station.

The communications between elements of the first aspect of the present invention comprises control signalling and document transfer. The document is constituted by a file configured in any binary format such as text format, comma or space separated variable format, or any user or software-defined format. By employing a printing control system accepting any binary file format provides a great advantage since it enables communication between two otherwise non-compatible systems is achieved. The header contains information such as information regarding data stream format such as PostScript, PDF, IPDS, PCL, PCLXL or AFP format, print formats such as simplex, duplex, colour, page size, page rotation, tray, stapling, number of pages of the spooled document, access for said one or more users to said spooled document, a digital client signature, duration in which the one or more users are allowed access to the spooled document, and number of pages defined by the spooled document or any combination thereof. The header ensures that the user table is updated with relevant information regarding which users are allowed access to the spooled document.

Further in accordance with the first aspect of the present invention each of the first plurality of client stations comprise a local memory, a display, a keyboard and preferably a local central processing unit such as constituted by personal computers, computer workstations and/or such as constituted by mobile communication clients like mobile phones or mobile communicators or any combinations thereof. Generally the first aspect of the present invention may be established incorporating a wide variety of client station types thus ensuring communication and transfer between various client types.

The spool provided for in the first aspect of the present invention performs spooling of the document according to a data stream format such as to PostScript, PDF, IPDS, PCL, PCLXL or AFP format. The printing control system allows for any data stream format to be utilised, hence ensuring further that generally a wide variety of printer types may be connected to the printing control system.

The printing control system establishes a secure network by utilising secure networking procedures providing symmetrical and/or asymmetrical encryption in accordance with public and/or private encryption keys. The encryption provided by the spool enhances security of the transmission between client stations connected in the network.

Additionally, the spool incorporates a port monitor for parsing the spooled document in order to determine data stream format such as PostScript, PDF, IPDS, PCL, PCLXL or AFP format, and further to determine print formats such as simplex, duplex, colour, page size, page rotation, tray, stapling, and number of pages the spooled document will constitute during printing of said spooled document. The page count is utilised for determining the price for performing a print of the spooled document at any printer connected to the network.

Further, in accordance with the first aspect of the present invention the job database is established on a memory storage unit accessible by the server such as magnetic storable hard disk, magnetic storable tape and/or magneto-optic storage disks on the server having the user table and the document table allocated in storage spaces on the memory storage unit. Further, the user table allocates a record space in the memory storage unit for the header, and the document table allocates a storage space in the memory storage unit for the spooled document. Alternatively, the user table allocates a record space in the memory storage unit for the header, and the document table allocates a storage space in the memory storage unit for a pointer to the spooled document on the local memory of the client station or in the document table. It is further possible to implement the server incorporating the spool, the job database and the print engine in a server memory. Thus providing a system which may utilised a bus hence significantly increasing processing and transmission times between elements of the present invention.

Any of alternative the above mentioned types of storage media may serve as a memory storage unit, hence the first aspect of the present invention ensures compatibility between new and older communication systems and additionally, provides a choice of storage media in accordance with the necessary capacity of the printing control system.

The printer communication unit according to the first aspect of the present invention comprises a front-end module for identifying the one or more users of the network and a control unit for providing an interface for the print engine and the server to the printer. In order to accomplish communication between the user and the printer communication unit the front-end module comprises a display for showing the user accessible print jobs and operations menus, and comprises a keypad for providing an interface between the user and the front-end.

The display according to the first aspect of the present invention utilises cathode-ray tube screen techniques or the display utilises liquid crystal display techniques. Either type of display provide high resolution clear visual graphic interfaces for the user. The keypad is constituted by a general personal computer keyboard, a numerical keypad or a functional keypad or constituted by a touch sensitive film mounted on the display so as to allow the user to perform user operations by pressing the touch sensitive film in accordance with information showed on the display. Utilising a touch screen further enhances the graphics interface between the user and the printer communication unit.

The front-end module according to the first aspect of the present invention comprises a iris scanner, a fingerprint reader for identifying the one or more users at the front-end module and/or preferably a card reader for reading card information from card such as a credit card, a library card, a health insurance card, a driving licence card, a passport card, a membership card, a company identity card or an institutional identity card. The card information includes information such as card user name, card user ID, card user credit, card user's access rights, card user's server address, card user identifying number, card issuing date, card identity number, digital signature of one or more of said client station of said first plurality of client stations or any combination thereof. The card reader receives card information from the card and communicates the card information to the server. The front-end module requests a first user pin code.

Further, in accordance with the first aspect of the present invention the card utilises electronic storage techniques, electro-magnetic storage techniques, magnetic storage techniques, magneto-optic storage techniques, optic storage techniques or any combinations thereof for storing of the card information.

The user identifying data includes the card information and the first user pin code and the user information stored in the user table includes system user name, system user ID, system user credit, system user's access rights, system user's server address, system user identifying number, system user PUK code (personal user key), system user initiation date or any combination thereof, and a second user pin code. The control unit transmits upon receipt of the first pin code the user identifying data to the server for verification. This transmission is accomplished by the control unit communicating with the front-end module and the printer through a parallel connection, a serial connection, a local area network (LAN) connection, a wireless connection such as a mobile radio transmission connection, an infra-red transmission connection or an ultra-sonic transmission connection, or any combination thereof.

The user identifying data includes the card information and a first user pin code and the user information stored in the user table includes system user name, system user ID, system user credit, system user's access rights, system user's server address, system user identifying number, system user PUK code, system user initiation date or any combination thereof, and a second user pin code. The server establishes and validates the one or more users by identifying the user information in the user table on the basis of the user identifying data and by matching the first pin code with the second pin code. Alternatively, during first use of the card by matching the system user PUK code with an entered user PUK code and the server locating in the document table all print jobs designated for the one or more users and communicating titles of all print jobs designated for the one or more users to said front-end display enabling the one or more users to select a print job or a multiplicity of print jobs.

Hence the server performs the verification of user identifying data by comparing the first pin code transmitted from the control unit with the second pin code attached to the user information stored in said user table. Furthermore, the server locates in the user table all print jobs designated for the user and communicates titles of all print jobs designated for the user to the front-end display enabling the user to select a print job. When the server has verified the user then the user may select any of the listed available print jobs and perform various operations on the available print jobs.

As the server receives a print job selection from the one or more users at the front-end module and the server provides the one or more users access to the spooled document in the document table in the job database upon validation of the user identifying data.

Subsequently the server provides an opportunity for the one or more users to delete the spooled document from the one or more users' print job list, determine desired number of copies required of the spooled document, retain printing of the spooled document in a draft version for a first price, view the spooled document on the display for a second price, print the spooled document on the printer for a third price and terminate further operations on the front-end module. The price of these optional operations allowed the user at the printer communication unit might be determined in accordance with various criteria. For example the price for printing of the spooled document may be different for each user depending on number of copies taken of the spooled document or depending on who the author of the particular spooled document is. Further the price might be based on the relative to for example artists royalty fees such as for example Koda-Gramex fees.

The server deducts the credit of the one or more users of a first amount equal to the first price if the one or more users prints a draft version of the spooled document, a second amount equal to the second price if the one or more users views the spooled document and a third amount equal to the third price if the one or more users prints the spooled document or the server establishes a client credit record for each of the client stations designating the one or more users and deducts the client credit record of a first amount equal to the first price if the one or more users prints a draft version of the spooled document, a second amount equal to the second price if the one or more users views the spooled document and a third amount equal to the third price if the one or more users prints the spooled document. Thus the client station designating a particular print job to a group of the one or more users of the network will be charged in accordance with the document type and in accordance with how many of the designated user prints the print job. For example a bookstore may have access to a printing control system through a printer communication unit and each time the bookstore wishes to sell a copy of a document designated to that book store the book store may perform a print job. Subsequently the bookstore will be charged either daily, weekly, monthly or yearly for the number of copies the bookstore has performed of the print job. The bookstore or generally users are provided with a wide range of options of operations allowing the users to select at wide variety of operations, which accordingly will be debited the users upon termination of operations. The printer communication unit may obviously be constituted by a personal computer, a work station, a mobile communicator or a mobile phone.

The above object, advantage and feature together with numerous other objects, advantages and features which will become evident from the below detailed description of a preferred embodiment of the present invention is according to a second aspect of the present invention obtained by a printing control method for ensuring one or more users of a network (such as a LAN: local area network, or a WAN: wide area network) secure access to a print job designated to said one or more users of said network, and said printing control system comprising:
(a) designating said print job defining a document containing user readable information and defining a header containing document access information to said one or more users by means of a client station of a first plurality of client stations,
(b) spooling of said document and substituting said document in said print job with a spooled document by means of a spool connected to said first plurality of client stations,
(c) receiving said spooled document and said header from said client station at a job database connected to said spool, defining a document table and a user table in said job database and storing said spooled document in said document table and storing said header in said user table,
(d) receiving user identifying data input by said one or more users to a printer communication unit of a second plurality of printer communication units,
(e) establishing said one or more users in said user table enabling said one or more users access to said network, validating said one or more users on the basis of said user identifying data input to said printer communication unit against user information stored in said user table, and ensuring said user identifying data and said user information provide said one or more users access to said spooled document by means of a server managed by a network administrator and interconnecting said printer communication unit to said job database,
(f) receiving said spooled document from said job database and having a request input for receiving a print request from said one or more users at a printer connected to said printer communication unit and communicating said print request to said server, and
(g) compiling of said spooled document to be communicated to said printer through said printer communication unit by means of a print engine interconnecting said job database and said printer communication unit, receiving said spooled document at said print engine from said document table in said job database.

The printing control method according to the second aspect of the present invention incorporates above described features, described with reference to the printing control according to the first aspect of the present invention.

### Brief description of the drawings

Figure 1 shows a schematic overview of a prior art communication network enabling remote printing.
Figure 2 shows a schematic overview of a printing control system enabling exclusive printing from any printer connected to a network.
Figure 3 shows a principal flow diagram of a method for providing exclusive printing from any printer connected to a network.

### Detailed description of the present invention

In the following the printing system according to the preferred embodiment of the present invention will be described in detail with reference to the figures listed above.

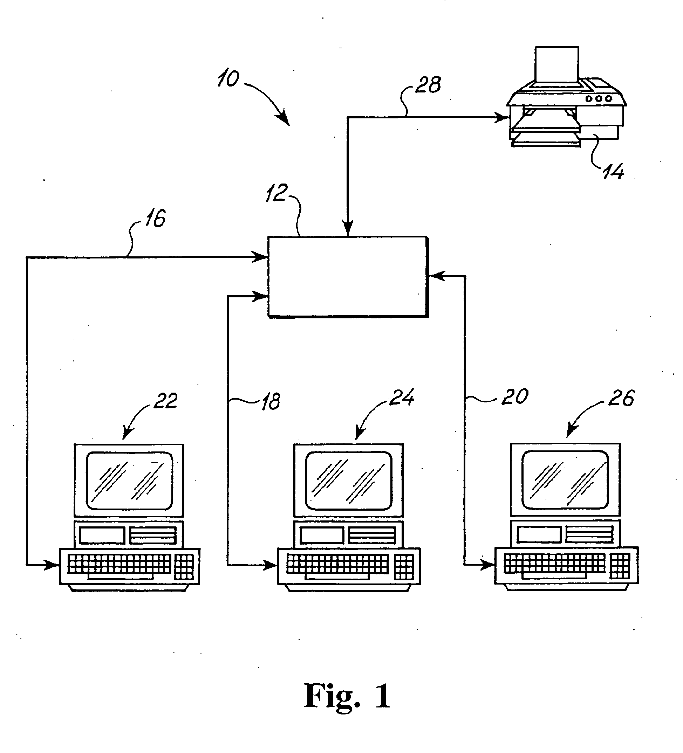

Figure 1 shows a schematic example of a prior art communication network designated by numeral 10 in its entirety. The communication network 10 provides communication between individual clients or personal units designated in their entirety by numerals 22, 24 and 26. Each of the individual clients or personal units 22, 24 and 26 comprise a local memory for storing of data files. The communication between the clients 22, 24 and 26 is executed and controlled by a server 12 connected to each of the clients 22, 24 and 26 through connections 16, 18 and 20. Additionally, the server 12 may further be connected to a printer 14 through connection 28.

The server 12 may be configured so as to allow all clients access to the printer 14. Alternatively, the server 12 may be configured so as to allow a specific client of all clients 22, 24 and 26 connected in the communication network 10 access to the printer 14 and additionally simultaneously deny all other clients access to the printer 14. Likewise any particular client, for example the client 22, may be configured to allow any specific or both the clients 24 and 26 access to a specific part of the client's 22 local memory so that both clients 24 and 26 or a specific client is allowed access to data files stored on that the client 22.

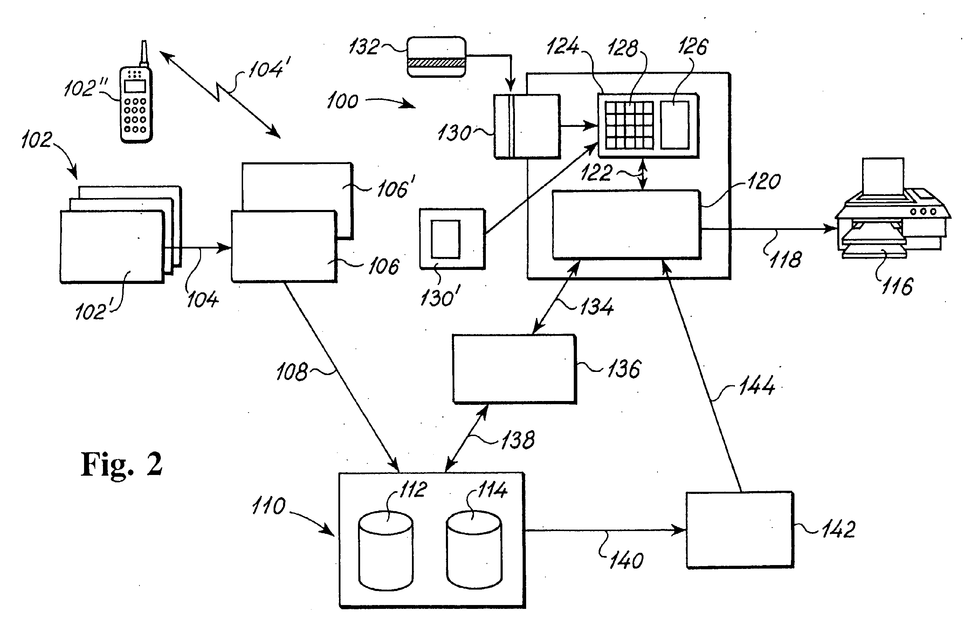

Figure 2 shows schematic overview of a printing control system in accordance with a preferred embodiment of the present invention, which printing control system is designated in its entirety by numeral 100. The printing control system 100 enables any client 102' of a plurality of clients 120 connected in a local area network (LAN) or a wide area network (WAN) remote printing of data files.

The client 102' utilises a spool 106 for compiling of a data file in accordance with a particular printing format. The spool 106 receives the data file through a connection 104 between the client 102' and the spool 106. The client 102' or the plurality of clients 120 in the preferred embodiment of the present invention may be constituted by a mobile phone 102" of a plurality of mobile phones or cellular phones to be configured as clients. The mobile phone 102" transmits the data file through a wireless connection designated by numeral 104' to a receiving spool 106'. The spooling operation may be performed by any general printer driver facility provided in any operational system such as Linux, Unix System V, Windows or Windows NT or spool systems on AS/400 or S/300 midrange and mainframe respectively. The client 102' may further perform an encryption of the data file by means of a port monitor running on the client 102' so as to ensure that the data file is secure and safe against any violation or unintentional disclosure of the contents of the data file to intruders.

The spool 106 establishes a print job by communicating the secured and spooled data file through a connection 108 to a job database 110 comprising a document table 112 and a user table 114. The document table 112 lists a plurality of established print jobs each containing the transferred secured and spooled data file (a print job document) or alternatively containing information regarding position of the secured and spooled data file in the document table 112 or on the local memory of the client 102'. Each record (a print job header) in the user table 114 contains information regarding an encryption key either public or private key, users allowed by the client 102' to perform the print job or alternatively users disallowed by the client 102' to perform the print job, and status of the present print job (print job header). The client 102' may at any time retrieve information from the user table 114 for determining if the data file is printed and in case it has been printed which user has or which users have printed the data file. In the print by reference system the user indicates a memory location of the print job on the local memory of the client 102' in a LAN or a WAN and as soon as the printing control system 100 identifies and verifies a user the secured and spooled data is decrypted and communicated to a printer 116.

The printer 116 enables printing of the print job document listed in the document table 112. The printer 116 is connected through a printer cable or a network connection 118 to a control unit 120. The printer cable 118 may constitute a serial connection or preferably the printer cable 118 constitutes a parallel connection between the control unit 120 and the printer 116. The control unit 120 is further connected through a link 122 to a front-end module 124, which comprises a display 126, a keyboard 128, a card reader 130 and/or a unit 130' for scanning irises or reading fingerprints. The display 126 provides guidance to the users and may be implemented by a general cathode-ray tube screen or in the preferred embodiment of the present invention the display 126 is constituted by a liquid crystal display (LCD). The keyboard 128 in combination with the card reader 130 enables any user of the printing control system 100 to identify themselves to the front-end module 124. The keyboard 128 may be any standard personal computer keyboard, a numerical keypad, a function keypad or any combinations thereof. In an alternative embodiment of the present invention a touch screen film mounted on the display 126 may constitute the keyboard 128.

The link 122 between the front-end module 124 and the control unit 120 may be constituted by a parallel connection or in the preferred embodiment of the present invention the link 122 is constituted by a serial connection. In case the front-end module 124 and the control unit 120 are incorporated into the printer 116 an internal bus may constitute the link 122.

Every user of the printing control system 100 has a card 132 for identifying the particular user at the front-end module 124. The card 132 may include information stored there upon by applying magnetically storage, electrically storage or any combinations thereof. In an alternative embodiment of the present invention the card 132 may include information stored there upon by applying optically storage or magneto-optically storage. The information stored on the card 132 may be name of user, password for user, user certificate, total number of print jobs allowed, executed number of print jobs, total number of allowed pages to be printed and total number of printed pages. Further the card 132 may contain information regarding specific access to particular issuers or clients writing to the LAN or WAN. Alternatively, the card 132 may be constituted by a credit card holding information regarding identity of cardholder and financial credit. Means for identifying the user of the printing control system 100 may further be implemented through non-card authentication such as finger print or iris identification.

By presenting the card 132 to the card reader 130 the front-end module 124 may determine the identity of the cardholder and request a pin code from the card holder in order to ensure a match between the cardholder and the certified user of that particular card 132.

The control unit 120 is connected through a connector 134 to a server 136 carrying out requests issued by the control unit 120. The server 136 being connected through a connector 138 further provides an interface between the job database 110 and the control unit 120. The interface ensures that the control unit 120 may communicate with any selected database. The server 136 may be connected to a plurality of control units similar to the control unit 120 either through a LAN or WAN thus enabling printing of a data file to be performed at any control unit connected through the LAN or WAN. Thus a secure and safe transmission of data files between two or more locations is achieved as soon as a user allowed to access the print job has been verified.

When the client 102' communicates a print job to the job database 110 by transmitting a secured and spooled document to the document table 112 of the job database 110, then the client 102' additionally communicates a header associated to the secured and spooled document, which header contains information regarding which users have access to perform a print of the secured and spooled document and is transferred to the user table 114.

A user may log on to the printing control system 100 according to the preferred embodiment of the present invention at any front-end module by introducing the user's card 132 into the card reader 130 and entering the user's pin code. The front-end module 124 subsequently verifies the user's identity by checking the pin code. If the pin code is not in accordance with the pin code registered in the server 136 for that particular user, then the display 126 informs the user that access is denied. On the other hand if the pin code is in accordance with the pin code registered in the server 136 for that particular user, then the front-end module 124 requests print jobs from the control unit 120. However, only print jobs, which the particular verified user is allowed to perform. The control unit 120 in turn requests this information from the server 136 checking the user table 114 in the job database 110. The verified user may then view a document list, select to printing of any of the print jobs or viewing any of the print jobs on the display 126, which print jobs are designated to the verified user. In case the verified user selects printing of a print job then the job database 110 communicates the print job through a connection 140 to a print engine 142. The print engine 142 enables the control unit 120 to upload the print job containing an secured and spooled data file through a connection 144 and subsequently enables the control unit 120 to further communicate the secured and spooled data file to the printer 116 so as to complete the print job.

A print log record is kept for each print job in the job database 110. The print log record lists users who have printed or viewed the print job, lists which front-end module 124 and which printer 116 was utilised for each particular user viewing or printing the print job, and lists the time and date for each particular user viewing or printing the print job. A port monitor incorporated in the spool 106 parses the print job document in order to count the number of pages to be printed by the printer. A small postscript application is transmitted to the printer 116 before and after performing printing of the print job thus inquiring the printer 116 before performing the print job and subsequent to performing the print job of the hardware page count. The resultant page count of the print job is then introduced into the print log record. In conjunction with performing a hardware count of printed pages specific user defined billing categories may be introduced in the print log record so as to determine a price for performing the print job. The price may vary as a function of number of pages printed in the print job or in fact the number of copies of the print job performed by the user and may further include a special price for viewing a print job. The print log record may be exported to the client 102' in any required file format such as comma separated format, space separated format, in text format or simply in binary format.

In the preferred embodiment of the present invention the user is, as described above, charged according to the number of pages the user prints, therefor the card issued to the user contains a maximum allowable number of printed pages. The number of printed pages for each card 132 is continuously monitored by the server 136 and the server 136 handles payments for the users printing or viewing of the print job. The price for performing a view or a print of a document may differ between users of the network in accordance to various agreements between the author of a document and the reader of that document e.g. in accordance with copyright agreements. Each specific user may at the front-end module 124 view his status account or credit and view printing costs for printing of the print job. If the specific user has no credit the server 136 will prevent the specific user from accessing the printing control system 100.

In addition to having general printers connected to the printing control system 100, the printing control system 100 further enables connecting copying machines to the LAN or WAN. The printing control system 100 tracks and logs copy clicks from copying machines when a user is identified at a copying machine. The documents in the job database 112 may be accessed at the copying machines by importing the documents to the copy machine in a variable file format.

The server 136 may be connected through a WAN to a plurality of servers and thus enable communication of print jobs and print log record information between the plurality of servers and the server 136. Thus the printing facilities provided by the server 136 is extended to the plurality of servers thereby introducing a safe wide printing control system for distribution of print jobs and cost of performing print jobs.

The client 102' may according to preferred embodiment of the present invention be constituted by personal computers, computer workstations or in an alternative embodiment of the present invention constituted by a combination of personal computers, computer workstations and mobile communication clients such as a mobile phone or a mobile communicator. The connections provided in the printing control system 100 is constituted by connections such as current carrying cables and/or optical cables or in an alternative embodiment of the present invention by mobile radio transmission links or by any combination of current carrying cables, optical cables and mobile radio transmission links.

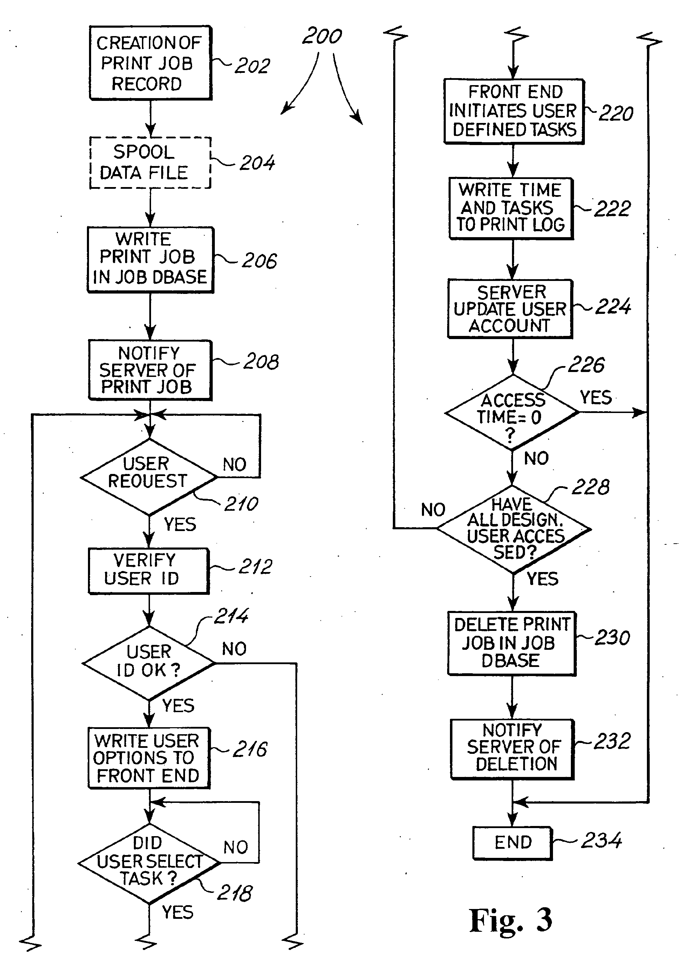

Figure 3 shows a principle flow diagram designated in its entirety by numeral 200 and describing the operations of the printing control system according to the preferred embodiment of the present invention. The flow diagram 200 is shown as a sequentially evolving system for explanatory reasons only, the preferred embodiment of the present invention, however, provides a system performing parallel operations. Some operations are concurrently performed by the client 102', the server 136 and by a printer communication unit constituting the control unit 120, the front end 124 and the card reader 130. The term parallel operation is in this context to be construed as performing concurrent operations, a multiple of operations simultaneously or as performing real time operations.

In block 202, shown in the flow diagram 200 a plurality of clients create a number of print job records at any time. The print job record consists of a data file or document or alternatively a pointer pointing to an address of the data file or document to be transferred to any designated user of the printing control system. The print job record further consists of a user file or header associated with the data file or document to be transferred through the printing control system, which user file or header includes information regarding users defined as designated users allowed access to the document, time during which the designated users are allowed access to the document and/or an address pointer to the document.

When the printing control system according to the preferred embodiment of the present invention transfers data from one unit or element to the next in the printing control system the data is transferred utilising secure networking procedures providing either symmetrical encryption and/or asymmetrical encryption. Thus the printing control system provides a safe communication between the plurality of clients and the designated users of the printing control system.

In block 204, the data file or document is spooled providing a document in a printer readable format. The spooling operation is performed at each client or in an alternative embodiment of the present invention at the server. Since in the preferred embodiment of the present invention the client performs the spooling operations a plurality of spooling operations may be performed simultaneously at each client.

As the data file or document is spooled the print job is transferred to the job database in block 206. The document is written to a document table and the user file or header is written to a user table, which document table and user table is described with reference to figure 2. In the printing control system according to an alternative embodiment of the present invention the user file or a header contains a pointer addressing the document in a storage medium at the client. The client provides the document to designated users of the printing control system upon request from a designated user. In this alternative embodiment the print job is written to the user table since the user file or header contains all necessary information for the printing control system to extract the document from the client.

In block 208, the server is notified of the existence of a print job transferred from any of the plurality of clients in the printing control system. Subsequently the server enters a waiting mode with respect to the particular print job shown as question block 210. The server waits for any user to request the particular print job at any printer connected in the printing control system. If a user performs a request for any print job at any of the printer communication unit connected in the printing control system, then the server initiates a verification of the requesting user shown as block 212 by correlating user log on information with user information stored in a server memory.

In block 214, the server determines whether the user should have access to the printing control system and provided the user log on information does not correspond with the user information stored in the server memory the user request is denied. Alternatively, the server transfers user options for the requesting user shown in block 216 to the printer communication unit. The user options provided to the requesting user vary for each requesting user in accordance with assigned options for each requesting user in the user table. The user options may be: List accessible print jobs, Select print job, View print job, Print print job, Show user account, Show number of pages of selected print job, Delete selected print job, Mark print job as not-deleteable, Display information about print job such information as duplex, simplex, colour, name, size, date, datastream (PostScript, PDF, PCL, PCLXL, IPDS or AFP format), expiration data and End.

In block 218, the server waits for the requesting user to select one of the options provided to him. During this waiting session shown as block 218 the server performs alternative operations while continuously monitoring the printer communication unit for a selection. When the requesting user has selected which operations to perform the server initiates the user-defined operations at the first available possibility, shown in block 220. The operations may be performed by the printer communication unit or by any printer connected to the printer communication unit.

The selection made by the requesting user and the time for the request is written to a print log file during block 222. This operation may be performed subsequent to the requested tasks or concurrently to the requested tasks. Additionally, the server updates a user account in accordance with the selected operations and with a predefined price for the requesting user for the particular selected operations during block 224.

The server monitors the operations performed on each print job and sets a flag or provides a signal when the print job according to the user file or header associated with each print job is or rather should be concluded. In case the time in which the print job should remain accessible to the designated users of the printing control system according to the preferred embodiment of the present invention has expired the server sets the flag. In block 226, the printing control system performs a check for whether the flag is set by the server.

If the flag is set then the operations performed on the associated print job are terminated. If on the other hand the flag is not set then the printing control system continues to examine whether all designated users have accessed the print job, shown in block 228. In case not all designated users have accessed the print job the printing control system returns back to the questioning block 210. Alternatively the printing control system deletes the print job from the job database in block 230, notifies the server of the deletion of the print job in block 232 and terminates further operations on the print job in block 234.

## Claims

1. A printing control system (100) for ensuring one or more users of a network/such as a LAN: local area network, or a WAN: wide area network secure access to a print job designated to said one or more users of said network, and said printing control system comprising:
(a) a client station (102, 102', 102") of a first plurality of client stations for designating said print job to said one or more users, said print job defining a document containing user readable information and defining a header containing document access information,
(b) a spool (106, 106') connected to said client station (102, 102', 102") for spooling of said document and substituting said document in said print job with a spooled document,
(c) a job database (110) connected to said spool (106, 106') for receiving said spooled document and said header from said client station (102, 102', 102"), said job database (110) defining a document table (112) and a user table (114) and storing said spooled document in said document table (112) and storing said header in said user table (114),
(d) a printer communication unit (120, 124, 130) of a second plurality of printer communication units for receiving user identifying data input by said one or more users to said printer communication unit (120, 124, 130),
(e) a server (136) managed by a network administrator and interconnecting said printer communication unit (120, 124, 130) to said job database (110) for establishing said one or more users in said user table (114) enabling said one or more users access to said network, for validating said one or more users on the basis of said user identifying data input to said printer communication unit (120, 124, 130) against user information stored in said user table(114), and for ensuring said user identifying data and said user information provide said one or more users access to said spooled document.
(f) a printer (116) connected to said printer communication unit (120, 124, 130) for receiving said spooled document from said job database (110) and having a request input for receiving a print request from said one or more users and communicating said print request to said server (136),
(g) a print engine (142) interconnecting said job database (110) and said printer communication unit (120, 124, 130) for compiling of said spooled document to be communicated to said printer (116) through said printer communication unit (120, 124, 130), said print engine (142) receiving said spooled document from said document table (112) in said job database (110), and
said job database (110) is established on a memory storage unit accessible by said server (136) such as magnetic storable hard disk, magnetic storable tape and/or magneto-optic storage disks on said server (136) and having said user table (114) and said document table (112) allocated in storage spaces on said memory storage unit,
**characterised in that**
said user table (114) allocates a record space in said memory storage unit for said header, and said document table (112) allocates a storage spaced in said memory storage unit for a pointer to said spooled document on said local memory of said client station (102. 102', 102'').

2. A printing control system according to claim 1, wherein said network is established by bus connections, by cable connections such as current carrying cables and/or optical cables, by wireless links such as mobile radio transmission links, infra-red transmission links or ultra-sonic transmission links, or by any combination thereof.

3. A printing control system according to claim 1 or 2, wherein said document is constituted by a file configured in any binary format such as text format, comma or space separated variable format or any user or software defined format.

4. A printing control system according to any of the claims 1 to 3, wherein each of said first plurality of client stations comprise a local memory, a display, a keyboard and preferably a local central processing unit such as constituted by personal computers, computer workstations and/or such as constituted by mobile communication clients like mobile phones or mobile communicators or any combinations thereof.

5. A printing control system according to any of the claims 1 to 4, wherein said spool (106, 106') spools said document according to a data stream format such as to PostScript, PDF, IPDS, PCL, PCLXL or AFP format.

6. A printing control system according to any of the claims 1 to 5, wherein said printing control system establishing a secure network by utilising secure networking procedures providing symmetrical and/or asymmetrical encryption in accordance with public and/or private encryption keys.

7. A printing control system according to any of the claims 1 to 6, wherein said spool (106, 106') incorporates a port monitor for parsing said spooled document in order to determine data stream format such as PostScript, PDF, IPDS, PCL, PCLXL or AFP format, and further to determine print formats such as simplex, duplex, colour, page size, page rotation, tray, stapling, and number of pages said spooled document will constitute during printing of said spooled document.

8. A printing control system according to claim 1, wherein said user table (114) allocates a record space in said memory storage unit for said header, and said document table (112) allocates a storage space in said memory storage unit for said spooled document.

9. A printing control system according to any of the claims 1 to 8, wherein said header contains information such as information regarding data stream format such as PostScript, PDF, IPDS, PCL, PCLXL or AFP format, print formats such as simplex, duplex, colour, page size, page rotation, tray, stapling, number of pages of said spooled document, access for said one or more users to said spooled document, a digital client signature, duration in which said one or more users is allowed access to said spooled document, and number of pages defined by said spooled document or any combination thereof.

10. A printing control system according to any of the claims 1 to 9, wherein said server (136) incorporates said spool (106, 106'), said job database (110) and said print engine (142) in a server memory.

11. A printing control system according to any of the claims 1 to 10, wherein said printer communication unit (120, 124, 130) comprises a front-end module (124) for identifying said one or more users of said network and a control unit (120) for providing an interface for said print engine (142) and said server (136) to said printer (116).

12. A printing control system according to claim 11, wherein said front-end module (124) comprises a display for showing said one or more users accessible print jobs and operations menus, and comprises a keypad for providing an interface between said one or more users and said front-end (124).

13. A printing control system according to claim 12, wherein said display utilising cathode-ray tube screen techniques or said display utilising liquid crystal display techniques.

14. A printing control system according to claims 12 or 13, wherein said keypad is constituted by a general personal computer keyboard, a numerical keypad or a functional keypad.

15. A printing control system according to claims 12 or 13, wherein said keypad is constituted by a touch sensitive film mounted on said display so as to allow said one or more users to perform user operations by pressing said touch sensitive film in accordance with information showed on said display.

16. A printing control system according to any of the claims 11 to 15, wherein said control unit (120) communicates with said front-end module (124) and said printer (116) through a parallel connection, a serial connection, a local area network (LAN) connection, a wireless connection such as a mobile radio transmission connection, an infra-red transmission connection or an ultra-sonic transmission connection, or any combination thereof.

17. A printing control system according to any of the claims 11 to 16, wherein said front-end module (124) comprises a iris scanner and/or a fingerprint reader for identifying said one or more users at said front-end module (124) and/or preferably a card reader (130) for reading card information from a card such as a credit card, a library card, a health insurance card, a driving licence card, a passport card, a membership card, a company identity card or an institutional identity card, said card information including information such as card user name, card user ID, card user credit, card user's access rights, card user's server address, card user identifying number, card issuing date, card identity number, digital signature of one or more of said client station (102, 102', 102") of said first plurality of client stations or any combination thereof.

18. A printing control system according to claim 17, wherein said card utilises electronic storage techniques, electro-magnetic storage techniques, magnetic storage techniques, magneto-optic storage techniques, optic storage techniques or any combinations thereof for storing of said card information.

19. A printing control system according to claims 17 or 18, wherein said user identifying data includes said card information and a first user pin code and wherein said user information stored in said user table (114) includes system user name, system user ID, system user credit, system user's access rights, system user's server address, system user identifying number, system user PUK code, system user initiation date or any combination thereof, and a second user pin code.

20. A printing control system according to any of the claims 17 to 19, wherein said card reader (130) receives said card information from said card and communicates said card information to said server (136) and said front-end module (124) requests a first user pin code from said one or more users.

21. A printing control system according to any of the claims 17 to 20, wherein said server (136) establishes and validates said one or more users by identifying said user information in said user table (114) on the basis of said user identifying data and by matching said first pin code with said second pin code or alternatively during first use of said card by matching said system user PUK code with an entered user PUK code and said server (136) locating in said document table (112) all print jobs designated for said one or more users and communicating titles of all print jobs designated for said one or more users to said front-end display enabling said one or more users to select a print job or a multiplicity of print jobs.

22. A printing control system according to any of the claims 11 to 21, wherein said server (136) receives a print job selection from said one or more users at said front-end module (124) and said server (136) providing said one or more users access to said spooled document in said document table (112) in said job database (110) upon validation of said user identifying data.

23. A printing control system according to any of the claims 12 to 22, wherein said server (136) provides an opportunity for said one or more users to delete said spooled document from said one or more users' print job list, determine desired number of copies required of said spooled document, retaining printing of said spooled document in a draft version for a first price, view said spooled document on said display for a second price, print said spooled document on said printer (116) for a third price and terminate further operations on said front-end module (124).

24. A printing control system according to claim 23, wherein said server (136) deducts said credit of said one or more users of a first amount equal to said first price if said one or more users prints a draft version of said spooled document, a second amount equal to said second price if said one or more users views said spooled document and a third amount equal to said third price if said one or more users prints said spooled document, or said server (136) establishing a client credit record for each of said client stations designating said one or more users deducts said client credit record of a first amount equal to said first price if said one or more users prints a draft version of said spooled document, a second amount equal to said second price if said one or more users views said spooled document and a third amount equal to said third price if said one or more users prints said spooled document.

25. A printing control system according to any of the claims 1 to 24, wherein said printer communication unit (120, 124, 130) is constituted by a personal computer, a work station, a mobile communicator or a mobile phone.

26. A printing control method for ensuring one or more users of a network (such as a LAN: local area network, or a WAN: wide area network) secure access to a print job designated to said one or more users of said network, and said printing control system comprising:
(h) designating said print job defining a document containing user readable information and defining a header containing document access information to said one or more users by means of a client station (102, 102', 102") of a first plurality of client stations,
(i) spooling of said document and substituting said document in said print job with a spooled document by means of a spool (106, 106') connected to said first plurality of client stations,
(j) receiving said spooled document and said header from said client station (102, 102', 102") at a job database (110) connected to said spool (106, 106'), defining a document table (112) and a user table (114) in said job database (110) and storing said spooled document in said document table (112) and storing said header in said user table (114),
(k) receiving user identifying data input by said one or more users to a printer communication unit (120, 124, 130) of a second plurality of printer communication units,
(I) establishing said one or more users in said user table (114) enabling said one or more users access to said network, validating said one or more users on the basis of said user identifying data input to said printer communication unit (120, 124, 130) against user information stored in said user table (114), and ensuring said user identifying data and said user information provide said one or more users access to said spooled document by means of a server (136) managed by a network administrator and interconnecting said printer communication unit (120, 124, 130) to said job database (110),
(m) receiving said spooled document from said job database (110) and having a request input for receiving a print request from said one or more users at a printer (116) connected to said printer communication unit (120, 124, 130) and communicating said print request to said server (136),
(n) compiling of said spooled document to be communicated to said printer (116) through said printer communication unit (120, 124, 130) by means of a print engine (142) interconnecting said job database (110) and said printer communication unit (120, 124, 130), receiving said spooled document at said print engine (142) from said document table (112) in said job database (110) and
said job database (110) is established on a memory storage unit accessible by said server (136) such as magnetic storable hard disk, magnetic storable tape and/or magneto-optic storage disks on said server (136) and having said user table (114) and said document table (112) allocated in storage spaces on said memory storage unit,
**characterised in that**
said user table (114) allocates a record space in said memory storage unit for said header, and said document table (112) allocates a storage spaced in said memory storage unit for a pointer to said spooled document on said local memory of said client station (102, 102', 102'').

27. A printing control method according to claim 26, wherein said method incorporating features as described with reference to said printing control system according to claims 2 to 25.

## Patentansprüche

1. Drucksteuersystem (100), um einem oder mehreren Benutzern eines Netzes, wie beispielsweise eines LAN: lokalen Netzes, oder eines WAN: Weitverkehrsnetzes, einen sicheren Zugriff auf einen Druckauftrag, der für den einen oder die mehreren Benutzer des Netzes bestimmt ist, zu garantieren, und das Drucksteuersystem umfassend:
(a) eine Clientstation (102, 102', 102'') einer ersten Mehrzahl von Clientstationen zum Bestimmen des Druckauftrags für den einen oder die mehreren Benutzer, wobei der Druckauftrag ein Dokument definiert, das benutzerlesbare Informationen enthält, und einen Kopf definiert, der Dokumentzugriffsinformationen enthält,
(b) eine Warteschlange (106, 106'), die mit der Clientstation (102, 102', 102'') verbunden ist, zum Halten des Dokuments und Ersetzen des Dokuments im Druckauftrag durch ein in der Warteschlange befindliches Dokument,
(c) eine Auftragsdatenbank (110), die mit der Warteschlange (106, 106') verbunden ist, zum Empfangen des in der Warteschlange befindlichen Dokuments und des Kopfs von der Clientstation (102, 102', 102''), wobei die Auftragsdatenbank (110) eine Dokumententabelle (112) und eine Benutzertabelle (114) definiert und das in der Warteschlange befindliche Dokument in der Dokumententabelle (112) speichert und den Kopf in der Benutzertabelle (114) speichert,
(d) eine Druckerkommunikationseinheit (120, 124, 130) einer zweiten Mehrzahl von Druckerkommunikationseinheiten zum Empfangen von Benutzeridentifikationsdaten, die durch den einen oder die mehreren Benutzer in die Druckerkommunikationseinheit (120, 124, 130) eingegeben werden,
(e) einen Server (136), der durch einen Netzverwalter verwaltet wird und die Druckerkommunikationseinheit (120, 124, 130) mit der Auftragsdatenbank (110) verbindet, zum Festellen des einen oder der mehreren Benutzer in der Benutzertabelle (114), um dem einen oder den mehreren Benutzern den Zugang zum Netz zu ermöglichen, zum Überprüfen des einen oder der mehreren Benutzer auf der Basis der Benutzeridentifikationsdaten, die in die Druckerkommunikationseinheit (120, 124, 130) eingegeben wurden, im Vergleich zu Benutzerinformationen, die in der Benutzertabelle (114) gespeichert sind, und zum Sicherstellen, dass die Benutzeridentifikationsdaten und die Benutzerinformationen dem einen oder den mehreren Benutzern den Zugriff auf das in der Warteschlange befindliche Dokument gewähren,
(f) einen Drucker (116), der mit der Druckerkommunikationseinheit (120, 124, 130) verbunden ist, zum Empfangen des in der Warteschlange befindlichen Dokuments von der Auftragsdatenbank (110) und mit einer Eingabe einer Anforderung zum Empfangen einer Druckanforderung von dem einen oder den mehreren Benutzern und Übertragen der Druckanforderung an den Server (136),
(g) ein Druckwerk (142), das die Auftragsdatenbank (110) und die Druckerkommunikationseinheit (120, 124, 130) miteinander verbindet, zum Kompilieren des in der Warteschlange befindlichen Dokuments, das durch die Druckerkommunikationseinheit (120, 124, 130) an den Drucker (116) übertragen werden soll, wobei das Druckwerk (142) das in der Warteschlange befindliche Dokument von der Dokumententabelle (112) in der Auftragsdatenbank (110) empfängt und
die Auftragsdatenbank (110) auf einer Speichereinheit eingerichtet ist, auf die der Server (136) zugreifen kann, wie beispielsweise einer Magnetspeicherplatte, einem Magnetspeicherband und/oder magnetooptischen Speicherplatten auf dem Server (136), und die Benutzertabelle (114) und die Dokumententabelle (112) Speicherplätze auf der Speichereinheit zugewiesen bekommen,
**dadurch gekennzeichnet, dass**
die Benutzertabelle (114) einen Datensatzplatz in der Speichereinheit für den Kopf reserviert, und die Dokumententabelle (112) einen Speicherplatz in der Speichereinheit für einen Zeiger zum in der Warteschlange befindlichen Dokument auf dem lokalen Speicher der Clientstation (102, 102', 102'') reserviert.

2. Drucksteuersystem nach Anspruch 1, wobei das Netz durch Busverbindungen, durch Kabelverbindungen, wie beispielsweise stromführende Kabel und/oder optische Kabel, durch drahtlose Verbindungen, wie beispielsweise Mobilfunkübertragungsverbindungen, Infrarotübertragungsverbindungen oder Ultraschallübertragungsverbindungen, oder durch jegliche Kombination davon aufgebaut ist.

3. Drucksteuersystem nach Anspruch 1 oder 2, wobei das Dokument aus einer Datei besteht, die in irgendeinem Binärformat, wie beispielsweise einem Textformat, einem komma- oder leerstellengetrennten variablen Format oder irgendeinem benutzer- oder softwaredefinierten Format konfiguriert ist.

4. Drucksteuersystem nach einem der Ansprüche 1 bis 3, wobei jede der ersten Mehrzahl von Clientstationen einen lokalen Speicher, eine Anzeige, eine Tastatur und vorzugsweise eine lokale zentrale Verarbeitungseinheit umfasst, wie beispielsweise durch Personalcomputer, Computer-Workstations gebildet und/oder wie beispielsweise durch Mobilkommunikationsclients wie Mobiltelefone oder Mobilkommunikatoren oder jegliche Kombination davon gebildet.

5. Drucksteuersystem nach einem der Ansprüche 1 bis 4, wobei die Warteschlangen (106, 106') das Dokument gemäß einem Datenstromformat hält, wie beispielsweise dem PostScript-, PDF-, IPDS-, PCL-, PCLXL oder AFP-Format.

6. Drucksteuersystem nach einem der Ansprüche 1 bis 5, wobei das Drucksteuersystem ein sicheres Netz durch Verwenden von sicheren Netzverbindungsprozeduren aufbaut, die eine symmetrische und/oder asymmetrische Verschlüsselung gemäß öffentlichen und/oder privaten Geheimschlüsseln bereitstellen.

7. Drucksteuersystem nach einem der Ansprüche 1 bis 6, wobei die Warteschlange (106, 106') einen Eingangs-Überwacher zum Analysieren des in der Warteschlange befindlichen Dokuments umfasst, um ein Datenstromformat, wie beispielsweise das PostScript, PDF-, IPDS-, PCL-, PCLXL- oder AFP-Format, festzustellen und ferner Druckformate, wie beispielsweise Simplex, Duplex, Farbe, Seitengröße, Seitendrehung, Schacht, Heftrand und Seitenanzahl, festzustellen, die das in der Warteschlange befindliche Dokument während des Druckens des in der Warteschlange befindlichen Dokuments darstellt.

8. Drucksteuersystem nach Anspruch 1, wobei die Benutzertabelle (114) einen Datensatzplatz in der Speichereinheit für den Kopf reserviert, und die Dokumententabelle (112) einen Speicherplatz in der Speichereinheit für das in der Warteschlange befindliche Dokument reserviert.

9. Drucksteuersystem nach einem der Ansprüche 1 bis 8, wobei der Kopf solche Informationen enthält wie Informationen in Bezug auf ein Datenstromformat, wie beispielsweise das PostScript-, PDF-, IPDS-, PCL-, PCLXL- oder AFP-Format, Druckformate, wie beispielsweise Simplex, Duplex, Farbe, Seitengröße, Seitendrehung, Schacht, Heftrand, Seitenanzahl des in der Warteschlange befindlichen Dokuments, den Zugriff für den einen oder die mehreren Benutzer auf das in der Warteschlange befindliche Dokument, eine digitale Clientsignatur, eine Dauer, während der dem einen oder den mehreren Benutzer der Zugriff auf das in der Warteschlange befindliche Dokument gestattet ist, und die Anzahl von Seiten, die durch das in der Warteschlange befindliche Dokument definiert werden, oder jegliche Kombination davon.

10. Drucksteuersystem nach einem der Ansprüche 1 bis 9, wobei der Server (136) die Warteschlange (106, 106'), die Auftragsdatenbank (110) und das Druckwerk (142) in einem Serverspeicher umfasst.

11. Drucksteuersystem nach einem der Ansprüche 1 bis 10, wobei die Druckerkommunikationseinheit (120, 124, 130) ein Vorderseiten-Modul (124) zum Identifizieren des einen oder der mehreren Benutzer des Netzes und eine Steuereinheit (120) zum Bereitstellen einer Schnittstelle für das Druckwerk (142) und den Server (136) zum Drucker (116) umfasst.

12. Drucksteuersystem nach Anspruch 11, wobei das Vorderseiten-Modul (124) eine Anzeige umfasst, um dem einen oder den mehreren Benutzern zugängliche Druckaufträge und Bedienungsmenüs zu zeigen, und einen Tastenblock zum Bereitstellen einer Schnittstelle zwischen dem einen oder den mehreren Benutzern und dem Vorderseiten-Modul (124) umfasst.

13. Drucksteuersystem nach Anspruch 12, wobei die Anzeige Kathodenstrahlröhrenbildschirmtechniken verwendet oder die Anzeige Flüssigkristallanzeigetechniken verwendet.

14. Drucksteuersystem nach Anspruch 12 oder 13, wobei der Tastenblock aus einer allgemeinen Personalcomputertastatur, einem numerischen Tastenblock oder einem Funktionstastenblock besteht.

15. Drucksteuersystem nach Anspruch 12 oder 13, wobei der Tastenblock aus einer berührungsempfindlichen Folie besteht, die auf der Anzeige angebracht ist, um es dem einen oder den mehreren Benutzern zu ermöglichen, Benutzeroperationen durch Drücken der berührungsempfindlichen Folie gemäß den Informationen durchzuführen, die auf der Anzeige dargestellt sind.

16. Drucksteuersystem nach einem der Ansprüche 11 bis 15, wobei die Steuereinheit (120) durch eine parallele Verbindung, eine serielle Verbindung, eine lokale Netz (LAN)-Verbindung, eine drahtlose Verbindung, wie beispielsweise eine Mobilfunkübertragungsverbindung, eine Infrarotübertragungsverbindung oder eine Ultraschallübertragungsverbindung, oder jegliche Kombination davon mit dem Vorderseiten-Modul (124) und dem Drucker (116) kommuniziert.

17. Drucksteuersystem nach einem der Ansprüche 11 bis 16, wobei das Vorderseiten-Modul (124) eine Iris-Abtastvorrichtung oder eine Fingerabdrucklesevorrichtung zum Identifizieren des einen oder der mehreren Benutzer am Vorderseiten-Modul (124) und/oder vorzugsweise eine Kartenlesevorrichtung (130) zum Auslesen von Karteninformationen von einer Karte, wie beispielsweise einer Kreditkarte, einer Bibliothekskarte, einer Krankenversicherungskarte, einer Führerscheinkarte, einer Reisepasskarte, einer Mitgliedskarte, einer Firmenausweiskarte oder einer Institutionsausweiskarte, umfasst, wobei die Karteninformationen solche Informationen wie Kartenbenutzernamen, Kartenbenutzer-ID, Kartenbenutzerkredit, Kartenbenutzerzugriffsberechtigungen, Kartebenutzerserveradresse, Kartenbenutzeridentifikationsnummer, Kartenausstelldatum, Kartenkennnummer, eine digitale Signatur der einen oder der mehreren Clientstationen (102, 102', 102'') der ersten Mehrzahl von Clientstationen oder jegliche Kombination davon enthalten.

18. Drucksteuersystem nach Anspruch 17, wobei die Karte elektronische Speichertechniken, elektromagnetische Speichertechniken, magnetische Speichertechniken, magnetooptische Speichertechniken, optische Speichertechniken oder jegliche Kombination davon zum Speichern der Karteninformationen verwendet.

19. Drucksteuersystem nach Anspruch 17 oder 18, wobei die Benutzeridentifikationsdaten die Karteninformationen und einen ersten Benutzer-PIN-Code enthalten, und wobei die Benutzerinformationen, die in der Benutzertabelle (114) gespeichert sind, Systembenutzername, Systembenutzer-ID, Systembenutzerzugriffsberechtigungen, Systembenutzerserveradresse, Systembenutzeridentifikationsnummer, Systembenutzer-PUK-Code, Systembenutzerbeginndatum oder jegliche Kombination davon und einen zweiten Benutzer-PIN-Code enthalten.

20. Drucksteuersystem nach einem der Ansprüche 17 bis 19, wobei die Kartenlesevorrichtung (130) die Karteninformationen von der Karte empfängt und die Karteninformationen an den Server (136) überträgt, und das Vorderseiten-Modul (124) einen ersten Benutzer-PIN-Code von dem einen oder den mehreren Benutzern anfordert.

21. Drucksteuersystem nach einem der Ansprüche 17 bis 20, wobei der Server (136) den einen oder die mehreren Benutzer durch Identifizieren der Benutzerinformationen in der Benutzertabelle (114) auf der Basis der Benutzeridentifikationsdaten und durch Vergleichen des ersten PIN-Codes mit dem zweiten PIN-Code oder alternativ während einer ersten Verwendung der Karte durch Vergleichen des Systembenutzer-PUK-Codes mit einem eingegebenen Benutzer-PUK-Code feststellt und überprüft, und der Server (136) in der Dokumententabelle (112) alle Druckaufträge ermittelt, die für den einen oder die mehreren Benutzer bestimmt sind, und Titel aller Druckaufträge, die für den einen oder die mehreren Benutzer bestimmt sind, an die Vorderseiten-Anzeige überträgt, um dem einen oder den mehreren Benutzer zu ermöglichen, einen Druckauftrag oder eine Vielzahl von Druckaufträgen auszuwählen.

22. Drucksteuersystem nach einem der Ansprüche 11 bis 21, wobei der Server (136) eine Druckauftragsauswahl von dem einen oder den mehreren Benutzern am Vorderseiten-Modul (124) empfängt, und der Server (136) dem einen oder den mehreren Benutzer bei Gültigkeit der Benutzeridentifikationsdaten den Zugriff auf das in der Warteschlange befindliche Dokument in der Dokumententabelle (112) in der Auftragsdatenbank (110) gewährt.

23. Drucksteuersystem nach einem der Ansprüche 12 bis 22, wobei der Server (136) dem einen oder den mehreren Benutzern die Möglichkeit bietet, das in der Warteschlange befindliche Dokument aus der Auftragsliste des einen oder der mehreren Benutzer zu löschen, eine gewünschte Anzahl von Kopien festzustellen, die vom in der Warteschlange befindlichen Dokument benötigt werden, ein Drucken des in der Warteschlange befindlichen Dokuments in einer Entwurfversion für einen ersten Preis festzuhalten, das in der Warteschlange befindliche Dokument auf der Anzeige für einen zweiten Preis anzusehen, das in der Warteschlange befindliche Dokument auf dem Drucker (116) für einen dritten Preis zu drucken und weitere Operationen auf dem Vorderseiten-Modul (124) zu beenden.

24. Drucksteuersystem nach Anspruch 23, wobei der Server (136) den Kredit des einen oder der mehreren Benutzer eines ersten Betrags gleich dem ersten Preis, wenn der eine oder die mehreren Benutzer eine Entwurfversion des in der Warteschlange befindlichen Dokuments drucken, eines zweiten Betrags gleich dem zweiten Preis, wenn der eine oder die mehreren Benutzer das in der Warteschlange befindliche Dokument ansehen, und eines dritten Betrags gleich dem dritten Preis, wenn der eine oder die mehreren Benutzer das in der Warteschlange befindliche Dokument drucken, abzieht oder der Server (136), der einen Clientkreditdatensatz für jede der Clientstationen erstellt, der den einen oder die mehreren Benutzer bestimmt, den Clientkreditdatensatz eines ersten Betrags gleich dem ersten Preis, wenn der eine oder die mehreren Benutzer eine Entwurfversion des in der Warteschlange befindlichen Dokuments drucken, eines zweiten Betrags gleich dem zweiten Preis, wenn der eine oder die mehreren Benutzer das in der Warteschlange befindliche Dokument ansehen, und eines dritten Betrags gleich dem dritten Preis, wenn der eine oder die mehreren Benutzer das in der Warteschlange befindliche Dokument drucken, abzieht.

25. Drucksteuersystem nach einem der Ansprüche 1 bis 24, wobei die Druckerkommunikationseinheit (120, 124, 130) aus einem Personalcomputer, einer Workstation, einem Mobilkommunikator oder einem Mobiltelefon gebildet ist.

26. Drucksteuerverfahren, um einem oder mehreren Benutzern eines Netzes (wie beispielsweise eines LAN: lokalen Netzes, oder eines WAN: Weitverkehrsnetzes einen sicheren Zugriff auf einen Druckauftrag, der für den einen oder die mehreren Benutzer des Netzes bestimmt ist, zu garantieren, und das Drucksteuerverfahren umfassend:
(h) Bestimmen des Druckauftrags, der ein Dokument definiert, das benutzerlesbare Informationen enthält, und einen Kopf definiert, der Dokumentzugriffsinformationen enthält, für den einen oder die mehreren Benutzer mithilfe einer Clientstation (102, 102', 102'') einer ersten Mehrzahl von Clientstationen,
(i) Halten des Dokuments und Ersetzen des Dokuments im Druckauftrag durch ein in der Warteschlange befindliches Dokument mithilfe einer Warteschlange (106, 106'), die mit der ersten Mehrzahl von Clientstationen verbunden ist,
(j) Empfangen des in der Warteschlange befindlichen Dokuments und des Kopfs von der Clientstation (102, 102', 102'') an einer Auftragsdatenbank (110), die mit der Warteschlange (106, 106') verbunden ist, Definieren einer Dokumententabelle (112) und einer Benutzertabelle (114) in der Auftragsdatenbank (110) und Speichern des in der Warteschlange befindlichen Dokuments in der Dokumententabelle (112) und Speichern des Kopfs in der Benutzertabelle (114),
(k) Empfangen von Benutzeridentifikationsdaten, die durch den einen oder die mehreren Benutzer in eine Druckerkommunikationseinheit (120, 124, 130) einer zweiten Mehrzahl von Druckerkommunikationseinheiten eingegeben werden,
(l) Etablieren des einen oder der mehreren Benutzer in der Benutzertabelle (114), um dem einen oder den mehreren Benutzern den Zugang zum Netz zu ermöglichen, Überprüfen des einen oder der mehreren Benutzer auf der Basis der Benutzeridentifikationsdaten, die in die Druckerkommunikationseinheit (120, 124, 130) eingegeben wurden, im Vergleich zu Benutzerinformationen, die in der Benutzertabelle (114) gespeichert sind, und Sicherstellen, dass die Benutzeridentifikationsdaten und die Benutzerinformationen dem einen oder den mehreren Benutzern den Zugriff auf das in der Warteschlange befindliche Dokument gewähren, mithilfe eines Servers (136), der durch einen Netzverwalter verwaltet wird und die Druckerkommunikationseinheit (120, 124, 130) mit der Auftragsdatenbank (110) verbindet,
(m) Empfangen des in der Warteschlange befindlichen Dokuments von der Auftragsdatenbank (110) und mit einer Eingabe, dass eine Anforderung zum Empfangen einer Druckanforderung von dem einen oder den mehreren Benutzern an einem Drucker (116), der mit der Druckerkommunikationseinheit (120, 124, 130) verbunden ist, und Übertragen der Druckanforderung an den Server (136),
(n) Kompilieren des in der Warteschlange befindlichen Dokuments, das durch die Druckerkommunikationseinheit (120, 124, 130) an den Drucker (116) übertragen werden soll, mithilfe eines Druckwerks (142), das die Auftragsdatenbank (110) und die Druckerkommunikationseinheit (120, 124, 130) miteinander verbindet, wobei das in der Warteschlange befindliche Dokument am Druckwerk (142) von der Dokumententabelle (112) in der Auftragsdatenbank (110) empfangen wird und
die Auftragsdatenbank auf einer Speichereinheit eingerichtet ist, auf die der Server (136) zugreifen kann, wie beispielsweise einer Magnetspeicherplatte, einem Magnetspeicherband und/oder magnetooptischen Speicherplatten auf dem Server (136), und Veranlassen, dass die Benutzertabelle (114) und die Dokumententabelle (112) Speicherplätzen auf der Speichereinheit zugewiesen werden,
**dadurch gekennzeichnet, dass**
die Benutzertabelle (114) einen Datensatzplatz in der Speichereinheit für den Kopf reserviert, und die Dokumententabelle (112) einen Speicherplatz in der Speichereinheit für einen Zeiger zum in der Warteschlange befindlichen Dokument auf dem lokalen Speicher der Clientstation (102, 102', 102'') reserviert.

27. Drucksteuerverfahren nach Anspruch 26, wobei das Verfahren Merkmale, wie unter Bezugnahme auf das Drucksteuersystem nach Anspruch 2 bis 25 beschrieben, umfasst.

## Revendications

1. Système de commande d'impression (100) en vue d'assurer à un ou plusieurs utilisateurs d'un réseau, comme, par exemple, un LAN : réseau local, ou un WAN : réseau étendu, un accès sécurisé à un projet d'impression indiqué audit un ou auxdits plusieurs utilisateurs dudit réseau, et ledit système de commande d'impression comportant :
(a) une station client (102, 102', 102") d'une première pluralité de stations client pour indiquer ledit projet d'impression audit un ou auxdits plusieurs utilisateurs, ledit projet d'impression définissant un document contenant des informations lisibles par un utilisateur et définissant un en-tête contenant des informations d'accès au document,
(b) un dispositif de retenue (106, 106') connecté à ladite station client (102, 102', 102") en vue de la mise en file d'attente dudit document et du remplacement dudit document dans ledit projet d'impression par un document à impression différée,
(c) une base de données de projets d'impression (110) connectée audit dispositif de retenue (106, 106') en vue de recevoir ledit document à impression différée et ledit en-tête de ladite station client (102, 102', 102"), ladite base de données de projets d'impression (110) définissant une table de documents (112) et une table d'utilisateurs (114) et stockant ledit document à impression différée dans ladite table de documents (112) et stockant ledit en-tête dans ladite table d'utilisateurs (114),
(d) une unité de communication d'imprimante (120, 124, 130) d'une seconde pluralité d'unités de communication d'imprimante en vue de recevoir des entrées de données d'identification d'utilisateur par ledit un ou lesdits plusieurs utilisateurs à ladite unité de communication d'imprimante (120, 124, 130),
(e) un serveur (136) géré par un administrateur de réseau et interconnectant ladite unité de communication d'imprimante (120, 124, 130) à ladite base de données de projets d'impression (110) en vue d'établir ledit un ou lesdits plusieurs utilisateurs dans ladite table d'utilisateurs (114) en autorisant audit un ou auxdits plusieurs utilisateurs l'accès audit réseau, en vue de valider ledit un ou lesdits plusieurs utilisateurs sur la base de ladite entrée de données d'identification d'utilisateur à ladite unité de communication d'imprimante (120, 124, 130) comparée à des informations d'utilisateur stockées dans ladite table d'utilisateurs (114), et en vue d'assurer que lesdites données d'identification d'utilisateur et lesdites informations d'utilisateur fournissent ledit accès d'un ou plusieurs utilisateurs audit document à impression différée.
(f) une imprimante (116) connectée à ladite unité de communication d'imprimante (120, 124, 130) en vue de recevoir ledit document à impression différée de ladite base de données de projets d'impression (110) et ayant une entrée de requête en vue de recevoir une requête d'impression dudit un ou desdits plusieurs utilisateurs et de communiquer ladite requête d'impression audit serveur (136), et
(g) un moteur d'impression (142) interconnectant ladite base de données de projets d'impression (110) et ladite unité de communication d'imprimante (120, 124, 130) afin de compiler ledit document à impression différée à communiquer à ladite imprimante (116) par l'intermédiaire de ladite unité de communication d'imprimante (120, 124, 130), ledit moteur d'impression (142) recevant ledit document à impression différée de ladite table de documents (112) dans ladite base de données de projets d'impression (110), et
ladite base de données de projets d'impression (110) est établie sur une unité de stockage en mémoire accessible par ledit serveur (136) comme, par exemple, un disque dur d'enregistrement magnétique, une bande d'enregistrement magnétique et/ou des disques de stockage magnéto-optiques sur ledit serveur (136) et ayant ladite table d'utilisateurs (114) et ladite table de documents (112) affectées dans des espaces de stockage sur ladite unité de stockage en mémoire,
**caractérisé en ce que**
ladite table d'utilisateurs (114) affecte un espace d'enregistrement dans ladite unité de stockage en mémoire pour ledit en-tête, et ladite table de documents (112) affecte un espace de stockage dans ladite unité de stockage en mémoire pour un pointeur audit document à impression différée sur ladite mémoire locale de ladite station client (102, 102', 102 ").

2. Système de commande d'impression selon la revendication 1, dans lequel ledit réseau est établi par des connexions de bus, par des connexions de câble, comme, par exemple, des câbles conducteurs et/ou des câbles à fibres optiques, par des liaisons sans fil, comme, par exemple, des liaisons de communication radio mobile, des liaisons de transmission infrarouge ou des liaisons de transmission à ultrasons, ou par une quelconque combinaison de cela.

3. Système de commande d'impression selon la revendication 1 ou 2, dans lequel ledit document est constitué par un fichier configuré dans un quelconque format binaire, comme, par exemple, un format texte, un format CSV ou un quelconque format défini par l'utilisateur ou par un logiciel.

4. Système de commande d'impression selon l'une quelconque des revendications 1 à 3, dans lequel chacune de ladite première pluralité de stations client comporte une mémoire locale, un affichage, un clavier et de préférence une unité de traitement centrale locale comme, par exemple, un unité constituée par des ordinateurs personnels, des stations de travail informatiques et/ou constituée par des clients de communication mobiles comme, par exemple, des téléphones mobiles ou des dispositifs de communication mobiles ou une quelconque combinaison de cela.

5. Système de commande d'impression selon l'une quelconque des revendications 1 à 4, dans lequel ledit dispositif de retenue (106, 106') met en file d'attente ledit document selon un format du flux de données comme, par exemple, le format PostScript, PDF, IPDS, PCL, PCLXL ou AFP.

6. Système de commande d'impression selon l'une quelconque des revendications 1 à 5, dans lequel ledit système de commande d'impression établit un réseau sécurisé en utilisant des procédures de réseautage sécurisées fournissant un chiffrement symétrique et/ou asymétrique selon des clefs de chiffrement publiques et/ou privées.

7. Système de commande d'impression selon l'une quelconque des revendications 1 à 6, dans lequel ledit dispositif de retenue (106, 106') intègre un contrôleur de ports pour analyser ledit document à impression différée afin de déterminer le format de flux de données, comme, par exemple, le format PostScript, PDF, IPDS, PCL, PCLXL ou AFP, et de déterminer en outre des formats d'impression comme, par exemple, recto, recto verso, couleur, dimensions de page, orientation de page, plateau, agrafage, et nombre de pages dudit document à impression différée au cours de l'impression dudit document à impression différée.

8. Système de commande d'impression selon la revendication 1, dans lequel ladite table d'utilisateurs (114) affecte un espace d'enregistrement dans ladite unité de stockage en mémoire pour ledit en-tête, et dans lequel ladite table de documents (112) affecte un espace mémoire dans ladite unité de stockage en mémoire pour ledit document à impression différée.

9. Système de commande d'impression selon l'une quelconque des revendications 1 à 8, dans lequel ledit en-tête contient des informations comme, par exemple, des information connexes au format du flux de données comme le format PostScript, PDF, IPDS, PCL, PCLXL ou AFP, aux formats d'impression comme, par exemple, recto, recto verso, couleur, dimensions de page, orientation de page, plateau, agrafage, nombre de pages dudit document à impression différée, accès pour ledit un ou lesdits plusieurs utilisateurs audit document à impression différée, une signature numérique de client, la durée pendant laquelle ledit un ou lesdits plusieurs utilisateurs est/sont autorisé(s) à accéder audit document à impression différée, et le nombre de pages défini par ledit document à impression différée ou une quelconque combinaison de cela.

10. Système de commande d'impression selon l'une quelconque des revendications 1 à 9, dans lequel ledit serveur (136) intègre ledit dispositif de retenue (106, 106'), ladite base de données de projets d'impression (110) et ledit moteur d'impression (142) dans une mémoire de serveur.

11. Système de commande d'impression selon l'une quelconque des revendications 1 à 10, dans lequel ladite unité de communication d'imprimante (120, 124, 130) comporte un module frontal (124) pour identifier ledit un ou plusieurs utilisateurs dudit réseau et une unité de commande (120) pour fournir une interface pour ledit moteur d'impression (142) et pour ledit serveur (136) à ladite imprimante (116).

12. Système de commande d'impression selon la revendication 11, dans lequel ledit module frontal (124) comporte un affichage pour afficher les projets d'impressions et les menus de fonctionnement accessibles par ledit un ou lesdits plusieurs utilisateurs, et comporte un clavier en vue de fournir une interface entre ledit un ou lesdits plusieurs utilisateurs et ledit module frontal (124).

13. Système de commande d'impression selon la revendication 12, dans lequel ledit affichage utilise des techniques d'écran à tube cathodique ou ledit affichage utilise des techniques d'affichage à cristaux liquides.

14. Système de commande d'impression selon la revendication 12 ou 13, dans lequel ledit clavier est un clavier habiituel d'ordinateur personnel, un clavier numérique ou un clavier fonctionnel.

15. Système de commande d'impression selon l'une quelconque des revendications 12 ou 13, dans lequel ledit clavier est équipé d'un film tactile monté sur ledit affichage afin de permettre audit un ou auxdits plusieurs utilisateurs d'effectuer des opérations d'utilisateur en actionnant ledit film tactile selon les informations affichée sur ledit affichage.

16. Système de commande d'impression selon l'une quelconque des revendications 11 à 15, dans lequel ladite unité de commande (120) communique avec ledit module frontal (124) et ladite imprimante (116) par une connexion parallèle, une connexion en série, une connexion à un réseau local (LAN), un connexion sans fil comme, par exemple, une connexion de communication radio mobile, une connexion de transmission infrarouge ou une connexion de transmission à infrasons, ou une quelconque combinaison de cela.

17. Système de commande d'impression selon l'une quelconque des revendications 11 à 16, dans lequel ledit module frontal (124) comporte un module de balayage d'iris et/ou un lecteur d'empreinte digitale pour identifier ledit un ou lesdits plusieurs utilisateurs audit module frontal (124) et/ou de préférence un lecteur de cartes (130) en vue de lire des informations de carte à partir d'une carte comme, par exemple, une carte de crédit, une carte de bibliothèque, une carte d'assurance maladie, une carte de permis de conduire, une carte de passeport, une carte d'adhérent, une carte d'identité professionnelle ou une carte d'identité institutionnelle, lesdites informations de carte comportant des informations telles qu'un nom d'utilisateur de carte, un numéro d'identification de carte, un crédit d'utilisateur de carte, des droits d'accès d'utilisateur de carte, une adresse de serveur d'utilisateur de carte, un numéro d'identification d'utilisateur de carte, une date d'émission de carte, un numéro d'identification de carte, une signature numérique d'un ou plusieurs desdites stations client (102, 102', 102") parmi ladite première pluralité de stations client, ou une quelconque combinaison de cela.

18. Système de commande d'impression selon la revendication 17, dans lequel ladite carte utilise des techniques de stockage électronique, des techniques de stockage électromagnétique, des techniques de stockage magnétique, des techniques de stockage magnéto-optique, des techniques de stockage optiques ou une quelconque combinaison de cela en vue de stocker lesdites informations de carte.

19. Système de commande d'impression selon l'une quelconque des revendications 17 ou 18, dans lequel lesdites données d'identification d'utilisateur incluent lesdites informations de carte et un premier code confidentiel d'utilisateur et dans lequel lesdites informations d'utilisateur stockées dans ladite table d'utilisateurs (114) incluent le nom d'utilisateur de système, le numéro d'identification d'utilisateur de système, le crédit d'utilisateur de système, les droits d'accès d'utilisateur de système, l'adresse de serveur de l'utilisateur de système, le numéro d'identification d'utilisateur de système, le code PUK d'utilisateur de système, la date d'activation d'utilisateur de système ou une quelconque combinaison de cela, et un second code confidentiel d'utilisateur.

20. Système de commande d'impression selon l'une quelconque des revendications 17 à 19, dans lequel ledit lecteur de cartes (130) reçoit lesdites informations de carte de ladite carte et communique lesdites informations de carte audit serveur (136) et ledit module frontal (124) demande un premier code confidentiel d'utilisateur dudit un ou desdits plusieurs utilisateurs.

21. Système de commande d'impression selon l'une quelconque des revendications 17 à 20, dans lequel ledit serveur (136) établit et valide ledit un ou lesdits plusieurs utilisateurs en identifiant lesdites informations d'utilisateur dans ladite table d'utilisateurs (114) sur la base desdites données d'identification d'utilisateur et en mettant en concordance ledit premier code confidentiel et ledit second code confidentiel ou alternativement, lors de la première utilisation de ladite carte, en mettant en concordance ledit code PUK d'utilisateur de système avec un code PUK d'utilisateur saisi, et ledit serveur (136) localise dans ladite table de documents (112) l'ensemble des projets d'impression désignés pour ledit un ou lesdits plusieurs utilisateurs et communique des titres de tous les projets d'impression désignés pour ledit un ou lesdits plusieurs utilisateurs audit affichage frontal ce qui permet audit un ou auxdits plusieurs utilisateurs de sélectionner un projet d'impression ou une multiplicité de projets d'impression.

22. Système de commande d'impression selon l'une quelconque des revendications 11 à 21, dans lequel ledit serveur (136) reçoit une sélection de projets d'impression dudit un ou desdits plusieurs utilisateurs au niveau dudit module frontal (124) et ledit serveur (136) fournit audit un ou auxdits plusieurs utilisateurs un accès audit document à impression différée dans ladite table de documents (112) dans ladite base de données de projets d'impression (110) postérieurement à la validation desdites données d'identification d'utilisateur.

23. Système de commande d'impression selon l'une quelconque des revendications 12 à 22, dans lequel ledit serveur (136) offre audit un ou audits plusieurs utilisateurs une possibilité d'annuler ledit document à impression différée de ladite liste de projets d'impression dudit un ou desdits plusieurs utilisateurs, de déterminer un nombre désiré de copies requises dudit document à impression différée, de conserver l'impression dudit document à impression différée dans une version temporaire pour un premier prix, de voir ledit document à impression différée sur ledit affichage pour un deuxième prix, d'imprimer ledit document à impression différée sur ladite imprimante (116) pour un troisième prix et de terminer d'autres opérations sur ledit module frontal (124).

24. Système de commande d'impression selon la revendication 23, dans lequel ledit serveur (136) déduit ledit crédit dudit un ou desdits plusieurs utilisateurs d'un premier montant égal audit premier prix lorsque ledit un ou lesdits plusieurs utilisateurs imprime(nt) une version temporaire dudit document à impression différée, d'un deuxième montant égal audit deuxième prix lorsque ledit un ou lesdits plusieurs utilisateurs visualise(nt) ledit document à impression différée et d'un troisième montant égal audit troisième prix lorsque ledit un ou lesdits plusieurs utilisateurs imprime(nt) ledit document à impression différée, ou ledit serveur (136) établit un enregistrement de crédit de client pour chacune desdites stations client en désignant ledit un ou lesdits plusieurs utilisateurs, déduit ledit enregistrement de crédit de client d'un premier montant égal audit premier prix lorsque ledit un ou lesdits plusieurs utilisateurs imprime(nt) une version temporaire dudit document à impression différée, d'un deuxième montant égal audit deuxième prix lorsque ledit un ou lesdits plusieurs utilisateurs visualise(nt) ledit document à impression différée et d'un troisième montant égal audit troisième prix lorsque ledit un ou lesdits plusieurs utilisateurs imprime(nt) ledit document à impression différée.

25. Système de commande d'impression selon l'une quelconque des revendications 1 à 24, dans lequel ladite unité de communication d'imprimante (120, 124, 130) comprend un ordinateur personnel, une station de travail, un dispositif de communication mobile ou un téléphone mobile.

26. Procédé de commande d'impression en vue d'assurer à un ou plusieurs utilisateurs d'un réseau (comme, par exemple, un LAN : réseau local, ou un WAN : réseau étendu) un accès sécurisé à un projet d'impression désigné audit un ou auxdits plusieurs utilisateurs dudit réseau, et ledit système de commande d'impression comportant les étapes consistant à :
(h) désigner ledit projet d'impression définissant un document contenant des informations lisibles par un utilisateur et en définissant un en-tête contenant des informations d'accès au document audit un ou auxdits plusieurs utilisateurs au moyen d'une station client (102, 102', 102") d'une première pluralité de stations client,
(i) mettre en file d'attente ledit document et remplacer ledit document dans ledit projet d'impression par un document à impression différée au moyen d'un dispositif de retenue (106, 106') connecté à ladite première pluralité de stations client,
(j) recevoir ledit document à impression différée et ledit en-tête à partir de ladite station client (102, 102', 102") à une base de données de projets d'impression (110) connectée audit dispositif de retenue (106, 106'), définir une table de documents (112) et une table d'utilisateurs (114) dans ladite base de données de projets d'impression (110) et stocker ledit document à impression différée dans ladite table de documents (112) et stocker ledit en-tête dans ladite table d'utilisateurs (114),
(k) recevoir une entrée de données d'identification d'utilisateur par ledit un ou lesdits plusieurs utilisateurs à une unité de communication d'imprimante (120, 124, 130) d'une seconde pluralité d'unités de communication d'imprimante,
(i) établir ledit un ou lesdits plusieurs utilisateurs dans ladite table d'utilisateurs (114), autoriser audit un ou auxdits plusieurs utilisateurs un accès audit réseau, valider ledit un ou lesdits plusieurs utilisateurs sur la base de ladite entrée de données d'identification d'utilisateur à ladite unité de communication d'imprimante (120, 124, 130) comparée à des informations d'utilisateur stockées dans ladite table d'utilisateurs (114), et assurer lesdites données d'identification d'utilisateur et lesdites informations d'utilisateur, fournir audit un ou auxdits plusieurs utilisateurs un accès audit document à impression différée au moyen d'un serveur (136) géré par un administrateur de réseau et interconnecter ladite unité de communication d'imprimante (120, 124, 130) et ladite base de données de projets d'impression (110),
(m) recevoir ledit document à impression différée de ladite base de données de projets d'impression (110) et obtenir une entrée de requête en vue de recevoir une requête d'impression dudit un ou desdits plusieurs utilisateurs à une imprimante (116) connectée à ladite unité de communication d'imprimante (120, 124, 130) et communiquer ladite requête d'impression audit serveur (136), et
(n) compiler ledit document à impression différée à communiquer à ladite imprimante (116) par l'intermédiaire de ladite unité de communication d'imprimante (120, 124, 130) au moyen d'un moteur d'impression (142), interconnecter ladite base de données de projets d'impression (110) et ladite unité de communication d'imprimante (120, 124, 130), recevoir ledit document à impression différée audit moteur d'impression (142) à partir de ladite table de documents (112) dans ladite base de données de projets d'impression (110, et
ladite base de données de projets d'impression (110) est établie sur une unité de stockage en mémoire (136) accessible par ledit serveur, comme, par exemple, un disque dur d'enregistrement magnétique, une bande d'enregistrement magnétique et/ou des disques de stockage magnéto-optiques sur ledit serveur (136) et affecter ladite table d'utilisateurs (114) et ladite table de documents (112) dans des espaces de stockage de ladite unité de stockage en mémoire,
**caractérisé en ce que**
ladite table d'utilisateurs (114) affecte un espace d'enregistrement dans ladite unité de stockage en mémoire pour ledit en-tête, et ladite table de documents (112) affecte un espace de stockage dans ladite unité de stockage en mémoire pour un pointeur audit document à impression différée sur ladite mémoire locale de ladite station client (102, 102', 102").

27. Procédé de commande d'impression selon la revendication 26, où ledit procédé comporte des caractéristiques telles que décrites en référence audit système de commande d'impression selon l'une quelconque des revendications 2 à 25.
